(19) Europäisches Patentamt
European Patent Office
Office européen des brevets

(11) EP 3 105 277 B1

# (12) FASCICULE DE BREVET EUROPEEN

(45) Date de publication et mention de la délivrance du brevet:
**26.09.2018 Bulletin 2018/39**

(21) Numéro de dépôt: **15706709.1**

(22) Date de dépôt: **11.02.2015**

(51) Int Cl.:
*C08G 59/66* (2006.01) *C03C 25/36* (2006.01)
*C08J 5/24* (2006.01) *C08G 59/68* (2006.01)
*C08L 63/08* (2006.01) *D06M 15/227* (2006.01)
*D01F 11/14* (2006.01) *C08L 15/00* (2006.01)

(86) Numéro de dépôt international:
**PCT/EP2015/052817**

(87) Numéro de publication internationale:
**WO 2015/121274 (20.08.2015 Gazette 2015/33)**

## (54) COMPOSITION D'ENSIMAGE POUR FIBRES DE RENFORT ET SES APPLICATIONS

DIMENSIONIERUNGSZUSAMMENSETZUNG ZUR VERSTÄRKUNG VON FASERN UND ANWENDUNGEN DAVON

SIZING COMPOSITION FOR REINFORCING FIBRES AND APPLICATIONS THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.02.2014 FR 1451099**

(43) Date de publication de la demande:
**21.12.2016 Bulletin 2016/51**

(73) Titulaires:
- **ArianeGroup SAS**
  **75015 Paris (FR)**
- **Université De Reims Champagne-Ardenne**
  **51097 Reims Cedex (FR)**
- **Centre National de la Recherche Scientifique**
  **75016 Paris (FR)**

(72) Inventeurs:
- **MARTIN, Arnaud**
  **F-54860 Haucourt-Moulaine (FR)**
- **DEFOORT, Brigitte**
  **F-33160 Saint Médard en Jalles (FR)**
- **COQUERET, Xavier**
  **F-51100 Reims (FR)**

(74) Mandataire: **Brevalex**
**95, rue d'Amsterdam**
**75378 Paris Cedex 8 (FR)**

(56) Documents cités:
**EP-A1- 1 924 727** **EP-A2- 0 138 609**
**WO-A1-2010/023217** **WO-A1-2011/010457**
**WO-A1-2013/056426** **CN-A- 101 858 037**
**US-A- 5 214 098**

- **Jian Ye Liu ET AL: "Effect of Sizing Agent on the Surface of Carbon Fiber and Interfacial Adhesion of Carbon Fiber/Vinyl Ester Resin Composite", Advanced Materials Research, vol. 239-242, 1 May 2011 (2011-05-01), pages 2958-2961, XP55390783, DOI: 10.4028/www.scientific.net/AMR.239-242.295 8**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### DOMAINE TECHNIQUE

La présente invention se rapporte au domaine de l'ensimage de fibres de renfort (ou fibres de renforcement) propres à entrer dans la fabrication de matériaux composites à matrice organique et fibres de renfort.

Plus spécifiquement, elle se rapporte à une composition d'ensimage pour fibres de renfort, qui permet d'améliorer l'adhésion de ces fibres vis-à-vis d'une matrice organique formant avec elles une pièce en un matériau composite et résultant de la polymérisation par transfert de chaîne d'une résine durcissable.

Elle se rapporte également aux applications de cette composition et, notamment, à un procédé pour améliorer l'adhésion de fibres de renfort vis-à-vis d'une matrice organique formant avec ces fibres une pièce en un matériau composite et résultant de la polymérisation par transfert de chaîne d'une résine durcissable, et qui comprend un ensimage des fibres de renfort au moyen de ladite composition.

L'invention, qui permet d'obtenir des pièces en matériaux composites aux propriétés remarquables de résistance aux sollicitations, tant transverses (c'est-à-dire dans la direction perpendiculaire aux fibres de renfort) que longitudinales (c'est-à-dire dans la direction des fibres de renfort), trouve un intérêt tout particulier dans les industries aéronautique, aérospatiale, ferroviaire, navale et automobile, que ce soit pour la réalisation de pièces de structure, de moteur, d'habitacle ou de carrosserie.

Toutefois, elle peut également être utilisée dans d'autres types d'industrie comme l'industrie de l'armement, par exemple pour la réalisation de pièces entrant dans la constitution de missiles ou de tubes lance-missiles, ou celle des articles de sports et de loisirs, par exemple pour la réalisation d'articles destinés aux sports nautiques et de glisse.

### ÉTAT DE LA TECHNIQUE ANTÉRIEURE

Les matériaux composites sont des matériaux hétérogènes qui permettent d'exploiter les propriétés mécaniques exceptionnelles de matériaux que l'on ne sait pas fabriquer sous forme massive mais seulement sous forme de fibres en les noyant dans une matrice formée d'un polymère organique (ou résine) durci, qui permet de lier les fibres entre elles, d'assurer une répartition des contraintes dans les matériaux composites et de protéger les fibres contre les agressions chimiques.

Une condition indispensable à l'obtention d'un matériau composite à hautes performances est que la liaison entre les fibres de renfort et la matrice qui le constituent soit bonne. En effet, si la liaison fibres de renfort/matrice est insuffisante, alors on obtient un matériau composite aux propriétés mécaniques transverses (comme la résistance au cisaillement) médiocres et, donc, aux possibilités d'utilisation très limitées, les pièces en matériaux composites étant le souvent destinées à travailler en état de contrainte tridirectionnelle.

Les fibres qui sont classiquement utilisées comme matériau de renfort, telles que les fibres de carbone présentent naturellement une faible adhésion vis-à-vis des matrices polymériques.

Aussi, les fabricants de fibres de renfort ont-ils cherché à adapter leurs fibres aux résines destinées à être utilisées comme matrices par les fabricants de pièces en matériaux composites.

Cette adaptation a été réalisée de deux façons différentes :

* d'une part, par des traitements de surface qui visent tous à créer à la surface des fibres des groupes fonctionnels aptes à réagir avec des fonctions chimiques portées par les résines ; il s'agit principalement de traitements d'oxydation chimique ou électrolytique (voir, par exemple, JP-A-3-076869 **[1])** mais d'autres types de traitement ont également été proposés comme des traitements thermiques par plasma (voir, par exemple, EP-A-1 484 435 **[2]),** une électrolyse en milieu acide ou basique (voir EP-A-0 640 702 **[3])** ou encore l'implantation d'atomes de type Si ou B (voir JP-B-2002-327374 **[4])** ; et
* d'autre part, par l'utilisation d'ensimages spécifiques, c'est-à-dire par le dépôt sur la surface des fibres de produits dont le rôle est d'augmenter la compatibilité des fibres vis-à-vis des résines, de faciliter leur imprégnation par les résines et d'assurer un « *accrochage* » entre les fibres et les matrices formées par la polymérisation de ces résines (voir "Effect of sizing Agent on the surface of carbon fiber and interfacial adhésion of carbon fiber/vinyl ester resin composite"; Jianye Liu, Heyi Ge, Juan Chen, Huashi Liu; Advanced Materials Research, Vols. 239-242, pp.2958-2961; d'une manière générale, les agents d'ensimage utilisés sont des polymères ou copolymères aux structures chimiques complexes et dont le choix est principalement guidé par l'expérience.

Il est à noter que des ensimages sont également appliqués sur les fibres de renfort dans d'autres buts que celui d'améliorer leur liaison avec une matrice organique comme, par exemple, celui de faciliter leur manipulation, de les lubrifier et de les protéger de l'abrasion qu'elles peuvent subir en étant frottées les unes contre les autres.

Si les traitements évoqués ci-dessus sont, d'une manière générale, relativement efficaces dans le cas de

matrices obtenues par polymérisation thermique (c'est-à-dire induite par la chaleur) de résines, il s'avère qu'ils ne le sont pas, ou insuffisamment, lorsque les matrices sont réalisées avec des résines dont la polymérisation est induite par un rayonnement lumineux (lumière visible ou ultraviolette) ou par un rayonnement ionisant (faisceau d'électrons ou rayons X).

En effet, l'expérience montre que les matériaux composites obtenus avec des résines polymérisées dont la polymérisation est induite par un rayonnement lumineux ou ionisant présentent des performances mécaniques transverses nettement inférieures à celles des meilleurs matériaux composites réalisés avec des résines polymérisées par voie thermique, ce qui est classiquement interprété comme le fait que la liaison fibres de renfort/matrice reste insuffisante en dépit des traitements appliqués aux fibres de renfort par leurs fabricants.

Or, la polymérisation de résines sous rayonnement lumineux ou ionisant présente un certain nombre d'avantages par rapport à la polymérisation de résines par voie thermique, ces avantages étant notamment liés à la possibilité de travailler sans autoclaves et, donc, de fabriquer plus aisément des pièces composites de grande taille ou de structure complexe, et d'obtenir des vitesses de polymérisation beaucoup plus élevées, ce qui permet des cadences de production supérieures pour des coûts inférieurs.

Récemment, il a été proposé par le Déposant, d'améliorer l'adhésion entre des fibres de carbone et d'une matrice obtenue par polymérisation d'une résine polymérisable par transfert de chaîne (puisqu'en pratique les résines qui sont capables de polymériser sous un rayonnement lumineux ou ionisant sont des résines dont la polymérisation s'effectue par un mécanisme de transfert de chaîne) en greffant sur la surface des fibres des groupes capables de servir d'agents de transfert de chaîne pendant la polymérisation de la résine (voir EP-A-1 924 727 **[5])** ou bien en déposant sur la surface des fibres un film polymère comprenant des groupes capables de servir d'agents de transfert de chaîne pendant la polymérisation de la résine (voir EP-A-2 099 849 **[6]**).

Poursuivant ses travaux sur l'amélioration des propriétés mécaniques transverses des matériaux composites, le Déposant s'est fixé pour but de fournir une nouvelle solution au problème du manque d'adhésion existant entre des fibres de renfort et, en particulier, des fibres de carbone et la matrice organique dans laquelle sont noyées ces fibres lorsque cette matrice est obtenue par polymérisation d'une résine polymérisable sous rayonnement lumineux ou ionisant, c'est-à-dire en pratique par un mécanique de transfert de chaîne.

## EXPOSÉ DE L'INVENTION

Ce but et d'autres sont atteints par l'invention qui propose, en premier lieu, une composition d'ensimage pour fibres de renfort, laquelle comprend :

- un prépolymère polybutadiène comprenant au moins deux fonctions époxydes, appelé plus simplement « *prépolymère polybutadiène époxydé »* dans ce qui suit ;
- un agent de réticulation comprenant au moins deux fonctions réactives dont l'une au moins est une fonction thiol ; et
- un catalyseur comprenant au moins une fonction amine tertiaire.

Ainsi, selon l'invention, on associe dans une même composition d'ensimage :

* un prépolymère polybutadiène époxydé apte à former, par polymérisation et réticulation, un film élastomère homogène sur une surface des fibres de renfort ;

* un agent de réticulation qui a un double rôle : d'une part, celui de permettre la réticulation du prépolymère polybutadiène époxydé sur la surface des fibres, par réaction avec les fonctions époxydes que comporte ce prépolymère, et, d'autre part celui d'instaurer des fonctions thiols - *via* le film de polybutadiène époxydé - sur la surface des fibres de renfort ; et

* un catalyseur amine tertiaire dont le rôle est de catalyser la réaction entre les fonctions époxydes du prépolymère butadiène époxydé et les fonctions réactives de l'agent de réticulation pour permettre la formation d'un réseau à partir de ce prépolymère.

Le film élastomère qui se forme sur la surface des fibres, après polymérisation et réticulation du prépolymère polybutadiène époxydé, permet, lorsque les fibres de renfort sont ultérieurement mises en contact avec une résine durcissable par polymérisation par transfert de chaîne :

- de conférer aux fibres un état de surface homogène, la surface du film élastomère se substituant, en effet, à la surface de ces fibres ;
- d'isoler la surface des fibres de la résine durcissable et d'éviter ainsi que la polymérisation de cette résine ne soit inhibée par les fonctions réactives présentes à la surface des fibres par suite de leur procédé de fabrication ; et
- de recouvrir les fibres de fonctions thiols qui vont (1) sensibiliser la polymérisation de la résine durcissable et (2)

jouer le rôle d'agents de transfert de chaîne pendant la polymérisation de cette résine et ainsi amorcer, par transformation en centres actifs, la formation, à partir de la surface du film élastomère, de nouvelles chaînes polymères de résine qui seront liées de façon covalente à cette surface dès leur création, améliorant ainsi la qualité de la liaison entre les fibres et la matrice organique résultant de la polymérisation de la résine durcissable.

Au surplus, les fonctions réactives que comportent le prépolymère polybutadiène époxydé et l'agent de réticulation sont susceptibles de réagir avec les fonctions réactives présentes à la surface des fibres par suite de leur procédé de fabrication et former ainsi des liaisons covalentes entre les fibres et le film élastomère qui, elles aussi, vont contribuer à l'amélioration de la qualité de l'interface entre les fibres et la matrice organique résultant de la polymérisation de la résine durcissable.

Il en résulte une augmentation très significative de l'adhésion entre les fibres de renfort et la matrice organique résultant de la polymérisation de la résine durcissable et donc des propriétés mécaniques transverses des matériaux composites formés par ces fibres et cette matrice.

Conformément à l'invention, le prépolymère polybutadiène époxydé comprend, de préférence, au moins deux unités répétitives choisies parmi les unités de formules (I) et (II) ci-après :

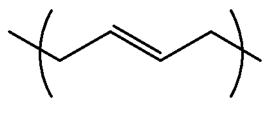

(I)

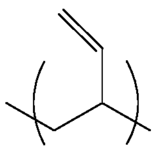

(II)

et au moins deux unités répétitives de formule (III) ci-après :

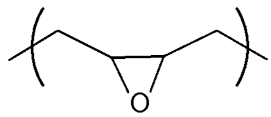

(III)

Des prépolymères polybutadiène époxydé de ce type sont, par exemple, les prépolymères qui sont commercialisés par les sociétés Sartomer et Cray Valley sous les références commerciales Poly bd™ 600E et Poly bd™ 605E.

Ces prépolymères répondent schématiquement à la formule (IV) ci-après :

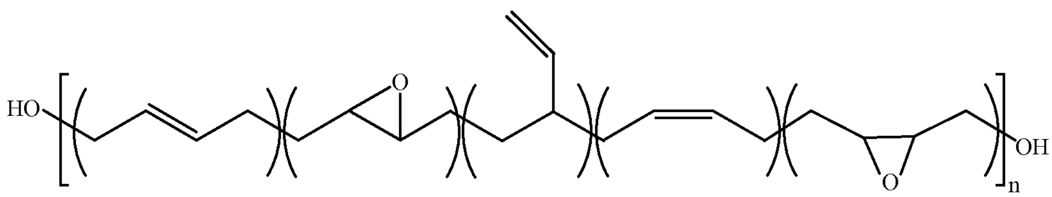

(IV)

dans laquelle n correspond au nombre de motifs répétitifs présents entre les crochets, et présentent typiquement les caractéristiques physico-chimiques suivantes :

- poids moléculaire ($M_n$) d'environ 1300 ;
- poids équivalent d'époxyde (EEW) de 400-500 g/mole pour le Poly bd™ 600E et de 260-330 g/mole pour le Poly bd™ 605E ; et
- viscosité à 30°C de 7 Pa.s pour le Poly bd™ 600E et de 22 Pa.s pour le Poly bd™ 605E.

Comme précédemment indiqué, l'agent de réticulation comprend au moins deux fonctions réactives dont l'une

au moins est une fonction thiol.

Conformément à l'invention, cet agent de réticulation peut notamment être choisi parmi les composés qui comprennent :

- une fonction acide carboxylique et une fonction thiol comme, par exemple, l'acide thioglycolique, l'acide thiolactique, l'acide 3-mercaptopropionique, l'acide 11-mercaptoundécanoïque ou l'acide 16-mercaptohexadécanoïque ;
- une fonction amine non aromatique (c'est-à-dire non liée à un ou plusieurs cycles aromatiques) et une fonction thiol comme, par exemple, la cystéamine ;
- deux fonctions acide carboxylique et une fonction thiol comme, par exemple, l'acide thiomalique, l'acide mercaptosuccinique et l'acide dimercaptosuccinique ;
- une fonction acide carboxylique, une fonction amine non-aromatique et une fonction thiol comme, par exemple, la cystéine ;
- deux fonctions thiol comme, par exemple, le 1, 2-éthanedithiol, le 1,3-propanedithiol, le 1,4-butanedithiol, le 2,3-butanedithiol ou le 1,5-pentanedithiol ; ou encore
- trois fonctions thiol comme, par exemple, le tétrakis(3-mercaptopropionate) de pentaérythritol, le tétrakis(2-mercaptoacétate) de pentaérythritol, le tris(3-mercaptopropionate) de triméthylolpropane ou le tris[2-(3-mercaptopropionyloxy)éthyl]isocyanurate.

De façon préférée, l'agent de réticulation est un composé trifonctionnel, c'est-à-dire à trois fonctions réactives, auquel cas il est avantageusement choisi parmi les composés qui comprennent deux fonctions acide carboxylique et une fonction thiol comme, par exemple, l'acide mercaptosuccinique, et les composés qui comprennent trois fonctions thiol comme, par exemple, le tétrakis(3-mercaptopropionate) de pentaérythritol.

Le catalyseur est, lui, avantageusement choisi parmi le méthacrylate de 2-(diméthylamino)éthyle, l'acrylate de 2-(diméthylamino)éthyle, l'acrylate de 2-(diéthyl-amino)éthyle et l'acrylate de 3-(diméthylamino)propyle.

Conformément à l'invention, la composition comprend, de préférence, en pourcentages massiques rapportés à sa masse totale :

- de 45 à 96% et, mieux encore, de 55 à 72% de prépolymère polybutadiène époxydé ;
- de 2,5 à 55% et, mieux encore, de 27 à 45% d'agent de réticulation ; et
- de 0,1 à 2,2% de catalyseur.

Pour son application sur des fibres de renfort, la composition d'ensimage selon l'invention peut se présenter sous la forme d'une solution.

Dans ce cas, elle comprend de plus un solvant organique tel que la méthyléthylcétone, le tétrahydrofurane, l'éther d'éthyle et de méthyle, l'acétate d'éthyle ou un mélange de ceux-ci.

Dans ce cas également, le prépolymère polybutadiène époxydé, l'agent de réticulation et le catalyseur représentent ensemble, en pourcentages massiques rapportés à la masse totale de la composition, de 0,5 à 5% et, mieux encore, de 1 à 3%, tandis que le solvant organique représente, en pourcentages massiques rapportés sur la masse totale de la composition, de 95 à 99,5% et, mieux encore, de 97 à 99%.

En variante, la composition d'ensimage peut également se présenter sous la forme d'une émulsion à phase interne (ou dispersée) organique et à phase externe (ou dispersante) aqueuse de manière à limiter l'utilisation de solvants organiques et à préserver ainsi, au mieux, la sécurité des personnes susceptibles de préparer ou d'utiliser cette composition d'ensimage ainsi que l'environnement.

Dans ce cas :

- soit l'agent de réticulation est un composé soluble dans les solvants organiques - comme le sont, par exemple, les composés à trois fonctions thiols tels que le tétrakis(3-mercaptopropionate) de pentaérythritol -, alors la phase interne organique comprend, de préférence, un solvant organique, non miscible à l'eau, dans lequel se trouvent le prépolymère polybutadiène époxydé, l'agent de réticulation et le catalyseur, tandis que la phase externe aqueuse comprend, de préférence, de l'eau dans laquelle se trouve un agent tensioactif (ou surfactant) ;
- soit l'agent de réticulation est un composé insoluble ou peu soluble dans les solvants organiques - comme c'est le cas, par exemple, des composés à deux fonctions acide carboxylique et une fonction thiol tels que l'acide mercaptosuccinique -, alors la phase interne organique comprend, de préférence, un solvant organique, non miscible à l'eau, dans lequel se trouve le prépolymère polybutadiène époxydé, tandis que la phase externe aqueuse comprend, de préférence, de l'eau dans laquelle se trouvent l'agent de réticulation, le catalyseur et un agent tensioactif.

De préférence, le solvant organique présent dans l'émulsion est l'acétate d'éthyle.

De préférence également, l'agent tensioactif est un agent tensioactif non ionique comme, par exemple, le

diacrylate de poly(éthylène glycol), ou anionique comme, par exemple, le dodécylsulfate de sodium (ou laurylsulfate de sodium) ou le laurylsulfate d'ammonium.

De préférence encore, la masse de la phase interne organique représente de 1 à 6% et, mieux encore, de 1 à 3% de la masse de la phase externe aqueuse.

Une telle émulsion peut notamment être obtenue en ajoutant une solution qui comprend, selon le cas, à la fois le prépolymère polybutadiène époxydé, l'agent de réticulation et le catalyseur, ou uniquement le prépolymère polybutadiène époxydé, dans le solvant organique non miscible à l'eau, à une solution aqueuse qui comprend, selon le cas, uniquement l'agent tensioactif, ou à la fois l'agent de réticulation, le catalyseur et l'agent tensioactif, dans de l'eau, et en soumettant le tout à une agitation vigoureuse, par exemple mécanique ou par ultrasons.

L'émulsion ainsi obtenue est stable et présente des gouttelettes, qui sont formées soit par le prépolymère polybutadiène époxydé, l'agent de réticulation et le catalyseur dans le cas où l'agent de réticulation et le catalyseur sont présents dans la phase interne organique, soit uniquement par le prépolymère polybutadiène époxydé dans le cas où l'agent de réticulation et le catalyseur sont présents dans la phase externe aqueuse, et dont le plus grand nombre présente typiquement un diamètre moyen (ou diamètre équivalent) allant de 50 nm à 200 nm.

Quelle que soit la forme sous laquelle la composition d'ensimage se présente (solution ou émulsion), l'ensimage de fibres de renfort par cette composition est extrêmement simple à mettre en oeuvre.

En effet, il suffit de tremper les fibres, par exemple au moyen d'un rouleau encreur, dans un bain constitué de la composition d'ensimage selon l'invention le temps nécessaire pour obtenir le dépôt d'une couche sur la surface des fibres représentant typiquement de 0,5 à 1,5% en masse de la masse des fibres, puis de soumettre les fibres, après leur retrait du bain d'ensimage, à un traitement thermique, par exemple à une température allant de 60 à 180°C et pendant une durée allant de 0,3 à 3 heures selon le type de prépolymère polybutadiène époxydé utilisé, pour obtenir la formation d'un film élastomère homogène sur la surface des fibres par polymérisation/ réticulation de ce prépolymère.

L'invention a aussi pour objet un procédé d'ensimage de fibres de renfort, qui est caractérisé en ce qu'il comprend l'application d'au moins une couche d'une composition d'ensimage telle que précédemment décrite sur une surface des fibres puis le traitement thermique de la couche ainsi appliquée.

Dans ce procédé, l'application d'au moins une couche de la composition d'ensimage et le traitement thermique qui est appliqué à cette couche peuvent notamment être réalisés tels que décrit ci-avant.

L'invention a en outre pour objet des fibres de renfort, qui comprennent un ensimage et qui sont caractérisées en ce que l'ensimage est formé par application d'au moins une couche d'une composition d'ensimage telle que précédemment décrite sur la surface des fibres puis traitement thermique de la couche ainsi appliquée.

Les fibres de renfort ainsi ensimées peuvent soit être immédiatement utilisées dans la fabrication de pièces en matériaux composites, soit être stockées en vue d'une utilisation ultérieure soit encore être conditionnées, par exemple sous forme de mats préimprégnés, en vue de leur livraison à des fabricants de pièces en matériaux composites. En effet, l'invention peut aussi bien être mise en oeuvre par les fabricants de fibres de renfort que par leurs utilisateurs.

Selon une disposition préférée de l'invention, les fibres de renfort sont des fibres de carbone.

Toutefois, il peut également s'agir de fibres de verre, les fibres de quartz, de fibres de graphite, de fibres métalliques, de fibres de poly(p-phénylène benzobisoxazole), de fibres d'aramide, de fibres de polyéthylène, de fibres de bore, de fibres de carbure de silicium, de fibres naturelles (par exemple, fibres de lin, de chanvre ou de bambou) et de mélanges de fibres de nature différente, par exemple carbone/verre, carbone/aramide, etc.

Par ailleurs, les fibres de renfort peuvent se présenter sous différentes formes telles que fils coupés, de fibres broyées, mats à filaments continus, mats à filaments coupés, stratifils (aussi appelés « *rovings* » en langues anglaise), tissus, tricots, feutres, etc, ou encore sous la forme de complexes réalisés par association de différents types de matériaux plans.

L'invention a également pour objet un procédé pour améliorer l'adhésion de fibres de renfort vis-à-vis d'une matrice organique formant avec les fibres une pièce en un matériau composite, la pièce étant obtenue par mise en contact des fibres avec une résine durcissable par polymérisation par transfert de chaîne, puis polymérisation de la résine, lequel procédé est caractérisé en ce qu'il comprend, avant que les fibres ne soient mises en contact avec la résine, un ensimage des fibres par application d'au moins une couche d'une composition d'ensimage telle que précédemment décrite sur une surface des fibres puis traitement thermique de la couche ainsi appliquée.

L'invention a encore pour objet un procédé de fabrication d'une pièce en un matériau composite comprenant des fibres de renfort dans une matrice organique, lequel procédé comprend la mise en contact des fibres de renfort avec une résine durcissable par polymérisation par transfert de chaîne et la polymérisation de la résine, et est caractérisé en ce qu'il comprend de plus, avant que les fibres ne soient mises en contact avec la résine, un ensimage des fibres par application d'au moins une couche d'une composition d'ensimage telle que précédemment décrite sur une surface des fibres puis traitement thermique de la couche ainsi appliquée.

Dans les procédés ci-avant, les fibres de renfort sont, là également, préférentiellement des fibres de carbone.

Quant à la résine durcissable, elle peut être choisie parmi toutes les résines qui sont aptes à durcir par un mécanisme de polymérisation par transfert de chaîne et ce, que ce soit sous l'effet de la chaleur ou sous l'effet d'un

rayonnement lumineux ou ionisant.

Toutefois, pour les raisons précédemment exposées, la résine durcissable est, de préférence, choisie parmi les résines polymérisables sous rayonnement lumineux ou ionisant et, en particulier, parmi les polyesters, les époxydes (tels que les époxydes de type diglycidyléther de bisphénol A ou DGEBA), les époxy(méth)acrylates (encore appelés vinylesters ou époxyvinylesters, tels que les di(méth)acrylates de DGEBA), les (méth)acrylates à noyau uréthanne, les bis-maléimides, les élastomères, les silicones, les époxy(méth)acrylates étant particulièrement préférés dans le cas où la pièce en matériau composite est destinée à des applications spatiales ou aéronautiques.

Il va de soi que la fabrication de la pièce en matériau composite peut être réalisée selon toutes les techniques connues de l'homme du métier des matériaux composites comme, par exemple, le moulage par enroulement filamentaire, le moulage par projection simultanée, le moulage sous vide, le moulage par injection basse pression de résine (ou RTM pour « *Resin Transfert Molding* »), le moulage à la presse à froid « *voie humide* » basse pression, le moulage par compression de mats préimprégnés (ou SMC pour « *Sheet Molding Compound* » ou encore le moulage par pultrusion.

Outre les avantages précédemment mentionnés, l'invention présente encore ceux d'être applicable à de très nombreux types de fibres de renfort entrant dans la fabrication de matériaux composites (fibres longues, semi-longues, fibres courtes, fibres oxydées, fibres déjà ensimées par leurs fournisseurs, etc), de ne faire appel qu'à des produits disponibles dans le commerce et de pouvoir être mise en oeuvre à des coûts compatibles avec une exploitation à une échelle industrielle.

D'autres caractéristiques et avantages de l'invention apparaîtront mieux à la lecture du complément de description qui suit et qui se réfère aux figures annexées.

Bien entendu, ce complément de description n'est donné qu'à titre d'illustration de l'invention et ne constitue en aucun cas une limitation de celle-ci.

## BRÈVE DESCRIPTION DES FIGURES

Les figures 1A et 1B illustrent les effets de différents additifs sur la conversion en polymère d'un monomère acrylate par polymérisation radicalaire, initiée par un rayonnement ionisant, telle qu'appréciée par chromatographie d'exclusion stérique ; la figure 1A met en évidence l'effet sensibilisateur d'un additif à fonction thiol, le dodécanethiol-1 (—♦—), tandis que la figure 1B met en évidence l'effet inhibiteur de deux additifs à fonction hydroxyle, le phénol (—♦—) et le 9-phénanthrol (—▲—), et d'un additif à fonction amine, le 1-aminopyrène (—■—) ; sur chacune de ces figures, le trait en pointillés correspond à la conversion en polymère du monomère acrylate en l'absence d'additif.

Les figures 2A, 2B et 2C illustrent les effets bénéfiques de l'utilisation d'une composition d'ensimage selon l'invention sur l'adhérence entre un substrat et une matrice organique obtenue par polymérisation radicalaire d'un monomère diacrylate de bisphénol A époxydé ; les figures 2A et 2B correspondent aux résultats d'essais d'adhérence ayant été obtenus pour deux substrats consistant en des feuilles de carbone, traités par des compositions d'ensimage selon l'invention, tandis que la figure 2C correspond au résultat d'un essai d'adhérence ayant été obtenu pour un substrat consistant également en une feuille de carbone, mais non traité.

La figure 3 illustre la distribution en nombre du diamètre moyen, exprimé en nm, des gouttelettes d'une composition d'ensimage selon l'invention se présentant sous la forme d'une émulsion à phase externe aqueuse, telle que déterminée à partir de trois mesures réalisées par diffusion dynamique de la lumière.

## EXPOSÉ DÉTAILLÉ DE MODES DE RÉALISATION PARTICULIERS

### EXEMPLE 1 : Mise en évidence de l'effet sensibilisateur d'un additif à fonction thiol sur la polymérisation radicalaire d'un monomère acrylate sous rayonnement ionisant

L'effet sensibilisateur d'un additif à fonction thiol sur la polymérisation radicalaire d'un monomère acrylate, initiée par un rayonnement ionisant, est mise en évidence par des essais qui consistent à :

- mélanger de l'acrylate de n-butyle (ABu) avec du dodécanethiol-1 à hauteur de 0,5, 1, 2, 5 et 10% massiques, rapportés à la masse totale des mélanges ;
- à soumettre les mélanges résultants à un rayonnement ionisant (ionisation sous faisceau d'électrons) à une dose de 50 kGy en un seul passage ; et
- à déterminer, pour chaque mélange ainsi soumis à ce rayonnement ionisant, le taux de conversion de l'acrylate de n-butyle en poly(acrylate de n-butyle) par chromatographie d'exclusion stérique (CES).

La CES est réalisée au moyen d'un système PL-GPC 50 Plus, associé à un injecteur automatique PL-ASRT

(Polymer Laboratories, Varian Incorporated). Le détecteur utilisé est un réfractomètre différentiel (RI). Le système de CES est composé de trois colonnes (PLgel 5 μm Mixed-C, 300 x 7,5 mm) en série. Il comprend également une pré-colonne (PLgel 5 μm Guard, 50 x 7,5 mm), ce qui amène la longueur totale de colonne à 950 mm pour un temps d'analyse de 38 minutes. Le tétrahydrofurane est utilisé comme solvant avec un débit de 1 mL/min, le volume d'injection est de 100 μL et la température du four est de 35°C. Les échantillons sont réalisés dans des piluliers de 4 mL et dilués pour avoir une concentration d'environ 1 mg/mL. Les solutions ainsi obtenues sont filtrées sur des filtres Millipore™ (diamètre des pores : 0,20 μm).

Le taux de conversion, noté π, de l'acrylate de n-butyle en poly(acrylate de n-butyle) est déterminé grâce à un étalonnage de la chromatographie avec des solutions contenant des masses de poly(acrylate de n-butyle) et des masses d'acrylate de n-butyle connues.

Pour un échantillon, il correspond au rapport de la masse de poly(acrylate de n-butyle), notée $m_{pABu}$, présent dans cet échantillon à la masse totale de poly(acrylate de n-butyle) et d'acrylate de n-butyle, notée $m_{ABu}$, présents dans ce même échantillon :

$$\pi = \frac{m_{pABu}}{m_{pABu} + m_{ABu}}$$

Les résultats de ces essais sont illustrés sur la figure 1A qui représente l'évolution du taux de conversion π en fonction de la teneur massique du dodécanethiol-1 (—♦—) ainsi que celui obtenu en l'absence d'additif (trait en pointillés).

Cette figure montre qu'un effet sensibilisateur du dodécanethiol-1 sur la polymérisation radicalaire de l'acrylate de n-butyle est observé dès l'addition d'une très faible quantité de ce thiol (0,5% massique) et que la conversion du monomère en polymère est doublée, par rapport à ce qu'elle est en l'absence d'additif, pour une teneur massique du dodécanethiol-1 de 10%.

A titre de comparaison, la figure 1B illustre les résultats obtenus lors d'essais ayant été réalisés comme les précédents mais en utilisant comme additifs, du phénol (—♦—), du 9-phénanthrol (—▲—) et du 1-aminopyrène (—■—) à hauteur de 1, 2 et 5% massiques et en soumettant les mélanges acrylate de n-butyle/additif à une dose de rayonnement ionisant de 10 kGy. Là également, cette figure représente l'évolution du taux de conversion de l'acrylate de n-butyle en poly(acrylate de n-butyle) en fonction de la teneur massique du phénol (—♦—), du 9-phénanthrol (—▲—) et du 1-aminopyrène (—■—) ainsi que celui obtenu en l'absence d'additif (trait en pointillés).

Cette figure montre que des additifs à fonction hydroxyle comme le phénol et le 9-phénanthrol, ou à fonction amine aromatique comme le 1-aminopyrène, ont, au contraire d'un additif à fonction thiol comme le dodécanethiol-1, un effet fortement inhibiteur sur la conversion de l'acrylate de n-butyle en poly(acrylate de *n*-butyle) et ce, à des teneurs massiques aussi faibles que 1%, cet effet inhibiteur étant particulièrement prononcé pour le 9-phénanthrol et le 1-aminopyrène.

**EXEMPLE 2 : Mise en évidence des effets bénéfiques de l'utilisation d'une composition d'ensimage selon l'invention sur l'adhérence entre un substrat et une matrice organique**

**2.1 - À l'échelle macroscopique** :

On traite deux feuilles de carbone (société Goodfellow, référence C 000440/13), dénommées ci-après feuilles 1 et 2, par une composition d'ensimage selon l'invention qui comprend :

- dans le cas de la feuille 1 : le prépolymère Poly bd™ 605E de la société Sartomer en tant que prépolymère polybutadiène époxydé, de l'acide mercaptosuccinique en tant qu'agent de réticulation, du méthacrylate de 2-(diméthylamino)éthyle en tant que catalyseur, dans les proportions massiques suivantes : 71,7% de prépolymère polybutadiène époxydé, 26,9% d'agent de réticulation et 1,4% de catalyseur, l'ensemble étant en solution à hauteur de 1 à 2% massiques dans du tétrahydrofurane ; et
- dans le cas de la feuille 2 : les mêmes constituants que ceux indiqués ci-dessus à l'exception de l'agent de réticulation qui est du tétrakis(3-mercapto-propionate) de pentaérythritol, dans les proportions massiques suivantes : 61,7% de prépolymère polybutadiène époxydé, 37,7% d'agent de réticulation et 0,6% de catalyseur, l'ensemble étant en solution à hauteur de 1 à 2% massique dans du tétrahydrofurane.

Les feuilles 1 et 2 sont immergées dans la composition d'ensimage, puis retirées de cette composition et soumises à un traitement thermique (100°C pendant 1 heure) pour induire la polymérisation/réticulation du prépolymère polybutadiène époxydé et, ainsi, la formation d'un film élastomère sur leur surface.

Puis, une résine à monomère diacrylate de bisphénol A époxydé (Société UCB Chemicals, référence EB600)

est déposée sur la partie supérieure des feuilles 1 et 2 ainsi que sur la partie supérieure d'une troisième feuille de carbone, qui est destinée à servir de feuille de référence et qui n'a pas été traitée par une composition d'ensimage selon l'invention. Dans tous les cas, la résine est étalée, à l'aide d'un filmographe à spirale, en une couche de 20 $\mu$m d'épaisseur, de façon à recouvrir toute la surface des feuilles. La résine est polymérisée par voie radicalaire sous faisceaux d'électrons au moyen d'un accélérateur d'électrons basse énergie (145 keV) de type Application Development Unit (société Advanced Electron Beams). La dose totale appliquée est de 150 kGy.

Chacune des feuilles 1, 2 et de référence est soumise à des essais d'adhérence que l'on réalise selon la norme ISO 2409.

Ces essais, qui permettent d'évaluer le niveau d'adhérence d'un revêtement sur un substrat, sont basés sur une méthode dite « *par quadrillage* » qui consiste à inciser ce revêtement avec un peigne comprenant 11 dents écartées les unes des autres de 1 mm (société Braive-Instrument, référence 1540) de façon à obtenir une surface quadrillée. Le quadrillage est obtenu en appliquant une pression uniforme sur le peigne et en effectuant deux incisions à 90°. Les parties détachables, qui ne sont pas parties avec les mouvements d'incision, sont ôtées au moyen d'un ruban adhésif (Tesa™ 4120) qui est appliqué en poussant avec un doigt sur la surface quadrillée puis retiré rapidement suivant un angle se rapprochant le plus possible de 180°. Le niveau d'adhérence du revêtement sur le substrat est évalué par comparaison avec des images représentatives du degré de dégradation du revêtement et référencé par des valeurs ISO.

Les résultats des essais d'adhérence ainsi effectués sont illustrés sur les figures 2A, 2B et 2C, la figure 2A correspondant à la feuille 1, la figure 2B correspondant à la feuille 2 et la figure 2C correspondant à la feuille de référence.

Comme le montrent ces figures, les feuilles traitées avec une composition d'ensimage selon l'invention (figures 2A et 2B) présentent une forte adhésion vis-à-vis de la résine durcie (avec une classification ISO mesurée de 0) et ce, quel que soit l'agent de réticulation à fonction(s) thiol(s) utilisé, contrairement à la feuille de référence (figure 2C) pour lequel un décollement de la résine est observé et une classification ISO de 5 est obtenue.

**2.2** - **Sur des matériaux composites :**

On prépare deux familles de composites, dénommées ci-après familles 1 et 2, en traitant des fibres de carbone (société Toho Tenax Europe, référence IMS 5001 24k) par des compositions d'ensimage selon l'invention, puis en imprégnant les fibres de carbone ainsi traitées d'une résine à monomère diacrylate de bisphénol A époxydé (Société UCB Chemicals, référence EB600) et en soumettant cette résine à une polymérisation par voie radicalaire sous faisceaux d'électrons.

Les fibres de carbone utilisées sont des fibres ex-PAN à module intermédiaire, non ensimées mais ayant subi un traitement d'oxydation électrolytique de surface au cours de leur fabrication.

Dans le cas de la famille 1 de composites, les fibres de carbone sont traitées avec des compositions d'ensimage qui comprennent le prépolymère Poly bd™ 605E de la société Sartomer en tant que prépolymère polybutadiène époxydé, de l'acide mercaptosuccinique en tant qu'agent de réticulation et du méthacrylate de 2-(diméthylamino)éthyle en tant que catalyseur, l'ensemble étant en solution à hauteur de 1 à 2% massiques dans de l'éther d'éthyle et de méthyle. Trois types de compositions d'ensimage, qui diffèrent uniquement par les proportions massiques de leurs constituants, sont utilisées, à savoir :

- composition A1 : 79% de prépolymère polybutadiène époxydé ; 20% d'agent de réticulation et 1% de catalyseur ;
- composition B1 : 71,7% de prépolymère polybutadiène époxydé ; 26,9% d'agent de réticulation et 1,4% de catalyseur ;
- composition C1 : 65,5% de prépolymère polybutadiène époxydé ; 32,8% d'agent de réticulation et 1,7% de catalyseur.

Dans le cas du composite 2, les fibres de carbone sont traitées avec des compositions d'ensimage qui comprennent les mêmes constituants que ceux indiqués ci-dessus à l'exception de l'agent de réticulation qui est du tétrakis(3-mercaptopropionate) de pentaérythritol. Là également, trois types de compositions d'ensimage, qui diffèrent uniquement par les proportions massiques de leurs constituants, sont utilisées, à savoir :

- composition A2 : 70,7% de prépolymère polybutadiène époxydé ; 28,8% d'agent de réticulation et 0,5% de catalyseur ;
- composition B2 : 61,7% de prépolymère polybutadiène époxydé ; 37,7% d'agent de réticulation et 0,6% de catalyseur ;
- composition C2 : 54,7% de prépolymère polybutadiène époxydé ; 44,6% d'agent de réticulation et 0,7% de catalyseur.

Dans tous les cas, les compositions d'ensimage sont appliquées sur les fibres de carbone au moyen d'un

dispositif de type chaîne à imprégner. Les mèches de fibres de carbone sont ainsi débobinées et amenées jusqu'à un stand d'imprégnation par le biais d'un système de poulies. Le stand contient un bac d'imprégnation sur lequel est posé un rouleau encreur qui baigne dans l'une des compositions d'ensimage. Après imprégnation par cette composition, les fibres de carbone sont rembobinées autour d'un rouleau vierge. Le taux massique de composition d'ensimage déposée à la surface de chaque fibre de carbone est de 0,8 $\pm$ 0,3%.

Puis, les fibres de carbone sont soumises à un traitement thermique (100°C pendant 1 heure) pour induire la polymérisation/réticulation du prépolymère polybutadiène époxydé et, ainsi, la formation d'un film élastomère sur leur surface.

Elles sont ensuite imprégnées de la résine à monomère diacrylate de bisphénol A époxydé en utilisant le même dispositif à imprégner que celui précédemment utilisé pour appliquer les compositions d'ensimage. Le taux massique d'imprégnation des fibres de carbone par la résine est de 39 $\pm$ 3%.

Les composites sont préparés à partir de plis bobinés des fibres ainsi imprégnées et sont assemblés de manière à ce que ces fibres soient toutes orientées dans le même sens (plaque unidirectionnelle). L'assemblage des plis se déroule suivant un cycle comprenant des étapes de drapage, de compactage et d'assemblage des plis. Le compactage est effectué à l'aide de poche à vide de façon à éliminer au maximum les porosités dues au drapage. Le cycle de compactage est effectué suivant un traitement thermique de 80°C pendant 2 heures. Les plaques ainsi obtenues sont laissées dans les « sacs à vide » afin d'effectuer la polymérisation de la résine sous faisceaux d'électrons. Cette polymérisation est réalisée au moyen d'un accélérateur d'électrons haute énergie (10 MeV) de type Circe™ II. La dose totale appliquée est de 100 kGy par 2 passages à 50 kGy.

Dans chaque famille de composites, une partie des composites est soumise à un traitement dit post-cuisson qui consiste en un traitement thermique à 160°C pendant 1 heure.

On prépare parallèlement des matériaux composites de référence en procédant de la même manière que décrit ci-dessus mais en utilisant des fibres de carbone n'ayant pas été préalablement traitées par une composition d'ensimage selon l'invention.

Chacun des composites des familles 1 et 2 et de référence est soumis à des essais en flexion 3 points dans le sens transverse suivant la norme NF EN 2746, au moyen d'une machine d'essais Instron 5566A équipée d'un capteur de force 10 kN.

Les résultats de ces essais sont présentés dans le tableau I ci-après.

Tableau I

| **Composites** | | **Sigma 2 en flexion transverse** (MPa) |
|---|---|---|
| Composites de référence | | 20 - 26 |
| Composites de la famille 1 | Sans post-cuisson | 39 - 43 |
| | Avec post-cuisson | 49 - 60 |
| Composites de la famille 2 | Sans post-cuisson | 46 - 54 |
| | Avec post-cuisson | 51 - 64 |

Ce tableau montre que les matériaux composites comprenant des fibres de carbone ayant été traitées par une composition d'ensimage selon l'invention présentent une résistance à la flexion transverse significativement améliorée par rapport à celle d'un matériau composite comprenant des fibres non traitées et ce, d'autant plus que ces matériaux composites ont été soumis à un traitement de post-cuisson.

**EXEMPLE 3 : Préparation d'une composition d'ensimage selon l'invention sous la forme d'une émulsion à phase interne organique et à phase externe aqueuse**

On obtient une composition d'ensimage selon l'invention sous la forme d'une émulsion à phase interne organique et à phase externe aqueuse en procédant comme suit.

On prépare une solution comprenant 1g du prépolymère Poly bd™ 605E de la société Sartomer dans 10 mL d'acétate d'éthyle.

On prépare parallèlement une solution 1 g de tétrakis(3-mercapto-propionate) de pentaérythritol dans 3 mL d'acétate d'éthyle et 5% molaires, rapportés au nombre de moles de tétrakis(3-mercaptopropionate de pentaérythritol, de méthacrylate de 2(diméthylamino)éthyle.

On mélange les deux solutions vraies ainsi obtenues et on ajoute progressivement le mélange résultant à 40 mL d'une solution contenant 2% massique de dodécylsulfate de sodium dans de l'eau.

Puis, on émulsionne le tout au moyen d'un homogénéisateur de type rotor-stator que l'on utilise à une vitesse de rotation de 24 000 rpm pendant deux minutes.

L'émulsion ainsi obtenue est soumise à une analyse par diffusion dynamique de la lumière (ou DLS pour « *Dynamic Light Scattering* ») pour mesurer la taille des gouttelettes présentes dans cette émulsion.

Les résultats de cette analyse sont illustrés sur la figure 3 qui représente la distribution en nombre du diamètre moyen (ou diamètre équivalent), exprimé en nm, des gouttelettes de l'émulsion telle que déterminée à partir de trois mesures par DLS.

Ils montrent que la population des gouttelettes la plus importante en taille présente un diamètre moyen de 122,4 nm. Le diamètre moyen de la population des gouttelettes majoritaire en taille est donc compris dans la gamme de 50 à 150 nm espérée. Les plus petites gouttelettes ont un diamètre moyen de 68 nm et représentent moins de 1% des gouttelettes présentes dans l'émulsion. De même, 1% au plus des gouttelettes présente un diamètre moyen supérieur à 550 nm.

L'émulsion est donc composée majoritairement de gouttelettes permettant d'avoir une émulsion stable et elle est composée en totalité de gouttelettes permettant d'obtenir la formation d'un film élastomère homogène sur la surface d'un substrat.

La stabilité de l'émulsion est confirmée par un test de vieillissement accéléré qui consiste à la soumettre à une centrifugation à une vitesse de rotation de 1000 rpm pendant 5 minutes et à l'issue duquel aucune démulsification n'est observée.

## RÉFÉRENCES CITÉES

**[1]** Demande de brevet japonais n° 3-076869
**[2]** Demande de brevet européen n° 1484 435
**[3]** Demande de brevet européen n° 0 640 702
**[4]** Brevet japonais n° 2002-327374
**[5]** Demande de brevet européen n° 1 924 727
**[6]** Demande de brevet européen n° 2 099 849

## Revendications

1. Composition d'ensimage pour fibres de renfort, **caractérisée en ce qu'**elle comprend :

   - un prépolymère polybutadiène comprenant au moins deux fonctions époxydes ;
   - un agent de réticulation comprenant au moins deux fonctions réactives dont l'une au moins est une fonction thiol ; et
   - un catalyseur comprenant au moins une fonction amine tertiaire.

2. Composition selon la revendication 1, **caractérisée en ce que** le prépolymère polybutadiène comprend au moins deux unités répétitives choisies parmi les unités de formules (I) et (II) ci-après :

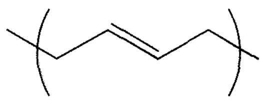
(I)

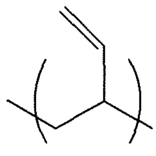
(II)

et au moins deux unités répétitives de formule (III) ci-après :

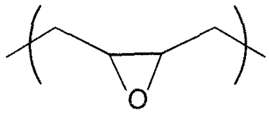

(III)

3. Composition selon la revendication 1 ou la revendication 2, **caractérisée en ce que** l'agent de réticulation est choisi parmi les composés qui comprennent une fonction acide carboxylique et une fonction thiol, une fonction amine non aromatique et une fonction thiol, deux fonctions acide carboxylique et une fonction thiol, une fonction acide carboxylique, une fonction amine non-aromatique et une fonction thiol, deux fonctions thiol ou trois fonctions thiol.

4. Composition selon la revendication 3, **caractérisée en ce que** l'agent de réticulation est choisi parmi les composés qui comprennent deux fonctions acide carboxylique et une fonction thiol, ou trois fonctions thiol, et, de préférence, parmi l'acide thiomalique, l'acide mercaptosuccinique, l'acide dimercaptosuccinique, le tétrakis(3-mercaptopropionate) de pentaérythritol, le tétrakis(2-mercaptoacétate) de pentaérythritol, le tris(3-mercaptopropionate) de triméthylolpropane et le tris[2-(3-mercaptopropionyloxy)éthyl]isocyanurate.

5. Composition selon l'une quelconque des revendications 1 à 4, **caractérisée en ce que** le catalyseur est choisi parmi le méthacrylate de 2-(diméthylamino)éthyle, l'acrylate de 2-(diméthylamino)éthyle, l'acrylate de 2-(diéthylamino)éthyle et l'acrylate de 3-(diméthylamino)propyle.

6. Composition selon l'une quelconque de revendications 1 à 5, **caractérisée en ce qu'**elle comprend en pourcentages massiques rapportés à la masse totale de la composition :

- de 45 à 96% de prépolymère polybutadiène ;
- de 2,5 à 55% d'agent de réticulation ; et
- de 0,1 à 2,2% de catalyseur.

7. Composition selon l'une quelconque des revendications 1 à 6, **caractérisée en ce qu'**elle se présente sous la forme d'une solution et comprend de plus un solvant organique, lequel est, de préférence, choisi parmi la méthyléthylcétone, le tétrahydrofurane, l'éther d'éthyle et de méthyle, l'acétate d'éthyle et les mélanges de ceux-ci.

8. Composition selon la revendication 7, **caractérisée en ce que** le prépolymère polybutadiène, l'agent de réticulation et le catalyseur représentent ensemble, en pourcentages massiques rapportés à la masse totale de la composition, de 0,5 à 5%, tandis que le solvant organique représente, en pourcentages massiques rapportés sur la masse totale de la composition, de 95 à 99,5%.

9. Composition selon l'une quelconque des revendications 1 à 6, **caractérisée en ce qu'**elle se présente sous la forme d'une émulsion à phase interne organique et à phase externe aqueuse.

10. Composition selon la revendication 9, **caractérisée en ce que** :

- la phase interne organique comprend le prépolymère polybutadiène, l'agent de réticulation et le catalyseur dans un solvant organique, non miscible à l'eau, tandis que la phase externe aqueuse comprend un agent tensioactif dans de l'eau ; ou
- la phase interne organique comprend le prépolymère polybutadiène dans un solvant organique, non miscible à l'eau, tandis que la phase externe aqueuse comprend l'agent de réticulation, le catalyseur et un agent tensioactif dans de l'eau.

11. Procédé d'ensimage de fibres de renfort, **caractérisé en ce qu'**il comprend l'application d'au moins une couche d'une composition d'ensimage selon l'une quelconque des revendications 1 à 10 sur une surface des fibres puis le traitement thermique de la couche ainsi appliquée.

12. Procédé pour améliorer l'adhésion de fibres de renfort vis-à-vis d'une matrice organique formant avec les fibres une pièce en un matériau composite, la pièce étant obtenue par mise en contact des fibres avec une résine durcissable par polymérisation par transfert de chaîne, puis polymérisation de la résine, **caractérisé en ce qu'**il comprend, avant que les fibres ne soient mises en contact avec la résine, un ensimage des fibres par application d'au moins une couche d'une composition d'ensimage selon l'une quelconque des revendications 1 à 10 sur une surface des fibres puis traitement thermique de la couche ainsi appliquée.

**13.** Procédé de fabrication d'une pièce en un matériau composite comprenant des fibres de renfort dans une matrice organique, comprenant la mise en contact des fibres de renfort avec une résine durcissable par polymérisation par transfert de chaîne et la polymérisation de la résine, **caractérisé en ce qu'**il comprend de plus, avant que les fibres ne soient mises en contact avec la résine, un ensimage des fibres par application d'au moins une couche d'une composition d'ensimage selon l'une quelconque des revendications 1 à 10 sur une surface des fibres puis traitement thermique de la couche ainsi appliquée.

**14.** Procédé selon l'une quelconque des revendications 11 à 13, **caractérisé en ce que** les fibres de renfort sont des fibres de carbone.

**15.** Procédé selon l'une quelconque des revendications 12 à 14, **caractérisé en ce que** la résine durcissable est choisie parmi les polyesters, les époxydes, les époxy(méth)acrylates, les (méth)acrylates à noyau uréthanne, les bis-maléimides, les élastomères et les silicones.

## Patentansprüche

**1.** Schlichtezusammensetzung für Verstärkungsfasern, **dadurch gekennzeichnet, dass** sie umfasst:

- ein Polybutadien-Prepolymer, umfassend mindestens zwei Epoxyfunktionen;
- ein Vernetzungsmittel, umfassend mindestens zwei reaktive Funktionen, von denen mindestens eine eine Thiolfunktion ist;
- und einen Katalysator, umfassend mindestens eine tertiäre Aminfunktion.

**2.** Zusammensetzung nach Anspruch 1, **dadurch gekennzeichnet, dass** das Polybutadien-Prepolymer mindestens zwei Wiederholungseinheiten umfasst, die aus den Einheiten der folgenden Formeln (I) und (II):

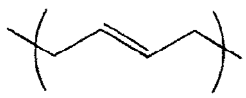
(I)

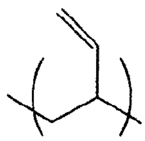
(II)

und mindestens zwei Wiederholungseinheiten, der folgenden Formel (III) ausgewählt sind:

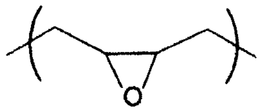
(III)

**3.** Zusammensetzung nach Anspruch 1 oder Anspruch 2, **dadurch gekennzeichnet, dass** das Vernetzungsmittel aus Verbindungen ausgewählt ist, die eine Carbonsäurefunktion und eine Thiolfunktion, eine nichtaromatische Aminfunktion und eine Thiolfunktion, zwei Carbonsäurefunktionen und eine Thiolfunktion, eine Carbonsäurefunktion, eine nichtaromatische Aminfunktion und eine Thiolfunktion, zwei Thiolfunktionen oder drei Thiolfunktionen umfassen.

**4.** Zusammensetzung nach Anspruch 3, **dadurch gekennzeichnet, dass** das Vernetzungsmittel aus Verbindungen ausgewählt ist, die zwei Carbonsäurefunktionen und eine Thiolfunktion oder drei Thiolfunktionen umfassen, und vorzugsweise aus Thioäpfelsäure, Mercaptobernsteinsäure, Dimercaptobernsteinsäure, Pentaerythrit-tetrakis(3-mercaptopropionat), Pentaerythrit-tetrakis-(2-mercaptoacetat), Trimethylolpropan-tris(3-mercaptopropionat) oder Tris[2-(3-mercaptopropionyloxy)ethyl]isocyanurat.

**5.** Zusammensetzung nach einem der Ansprüche 1 bis 4, **dadurch gekennzeichnet, dass** der Katalysator aus 2-(Dimethylamino)ethylmethacrylat, 2-(Dimethylamino)ethylacrylat, 2-(Diethylamino)ethylacrylat und 3-(Dimethylamino)propylacrylat ausgewählt ist.

6. Zusammensetzung nach einem der Ansprüche 1 bis 5, **dadurch gekennzeichnet, dass** sie in Gewichtsprozent, bezogen auf das Gesamtgewicht der Zusammensetzung, umfasst:

- 45 bis 96 % Polybutadien-Prepolymer;
- 2,5 bis 55 % Vernetzungsmittel; und
- 0,1 bis 2,2 % Katalysator.

7. Zusammensetzung nach einem der Ansprüche 1 bis 6, **dadurch gekennzeichnet, dass** sie in Form einer Lösung vorliegt und außerdem ein organisches Lösungsmittel enthält, das vorzugsweise aus Methylethylketon, Tetrahydrofuran, Ethyl- und Methylether, Ethylacetat und Mischungen davon ausgewählt ist.

8. Zusammensetzung nach Anspruch 7, **dadurch gekennzeichnet, dass** das Polybutadien-Prepolymer, das Vernetzungsmittel und der Katalysator zusammen in Gewichtsprozent, bezogen auf das Gesamtgewicht der Zusammensetzung, 0,5 bis 5 % ausmachen, während das organische Lösungsmittel in Gewichtsprozent, bezogen auf das Gesamtgewicht der Zusammensetzung, 95 bis 99,5 % ausmacht.

9. Zusammensetzung nach einem der Ansprüche 1 bis 6, **dadurch gekennzeichnet, dass** sie in Form einer Emulsion mit einer organischen inneren Phase und einer wässrigen äußeren Phase vorliegt.

10. Zusammensetzung nach Anspruch 9, **dadurch gekennzeichnet, dass**:

- die organische innere Phase das Polybutadien-Prepolymer, das Vernetzungsmittel und den Katalysator in einem organischen Lösungsmittel umfasst, das nicht mit Wasser mischbar ist, während die wässrige äußere Phase ein Tensid in Wasser umfasst; oder
- die organische innere Phase das Polybutadien-Prepolymer in einem organischen Lösungsmittel umfasst, das nicht mit Wasser mischbar ist, während die wässrige äußere Phase das Vernetzungsmittel, den Katalysator und ein Tensid in Wasser umfasst.

11. Verfahren zum Schlichten von Verstärkungsfasern, **dadurch gekennzeichnet, dass** es das Auftragen mindestens einer Schicht einer Schlichtezusammensetzung nach einem der Ansprüche 1 bis 10 auf eine Oberfläche der Fasern und das anschließende Wärmebehandeln der auf diese Weise aufgetragenen Schicht umfasst.

12. Verfahren zum Verbessern der Haftung von Verstärkungsfasern an einer organischen Matrix, die mit den Verstärkungsfasern ein Werkstück aus einem Verbundmaterial bildet, wobei das Werkstück durch Inkontaktbringen der Fasern mit einem durch Polymerisation mit Kettenübertragung härtbaren Harz, dann Polymerisieren des Harzes erhalten wird, **dadurch gekennzeichnet, dass** es vor dem Inkontaktbringen der Fasern mit dem Harz ein Schlichten der Fasern durch Auftragen mindestens einer Schicht einer Schlichtezusammensetzung nach einem der Ansprüche 1 bis 10 auf eine Oberfläche der Fasern und anschließendes Wärmebehandeln der auf diese Weise aufgetragenen Schicht umfasst.

13. Verfahren zur Herstellung eines Werkstücks aus Verbundmaterial, umfassend Verstärkungsfasern in einer organischen Matrix, umfassend das Inkontaktbringen der Verstärkungsfasern mit einem durch Polymerisation mit Kettenübertragung härtbaren Harz, **dadurch gekennzeichnet, dass** es ferner, bevor die Fasern mit dem Harz in Kontakt gebracht werden, ein Schlichten der Fasern durch Auftragen mindestens einer Schicht einer Schlichtezusammensetzung nach einem der Ansprüche 1 bis 10 auf eine Oberfläche der Fasern, dann Wärmebehandeln der auf diese Weise aufgetragenen Schicht umfasst.

14. Verfahren nach einem der Ansprüche 11 bis 13, **dadurch gekennzeichnet, dass** die Verstärkungsfasern Kohlenstofffasern sind.

15. Verfahren nach einem der Ansprüche 12 bis 14, **dadurch gekennzeichnet, dass** das härtbare Harz aus Polyestern, Epoxiden, Epoxy(meth)acrylaten, (Meth)acrylaten mit Urethankern, Bismaleimiden, Elastomeren und Silikonen ausgewählt ist.

## Claims

1. Sizing composition for reinforcing fibres, **characterized in that** it comprises:

   - a polybutadiene prepolymer comprising at least two epoxy functions;
   - a cross-linking agent comprising at least two reactive functions, at least one of which is a thiol function; and
   - a catalyst comprising at least one tertiary amine function.

2. Composition according to claim 1, **characterized in that** the polybutadiene prepolymer comprises at least two repetitive units chosen from the units of formulas (I) and (II) below:

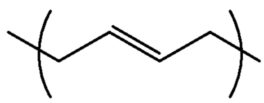

(I)

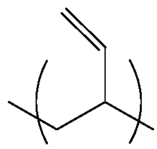

(II)

and at least two repetitive units of formula (III) below:

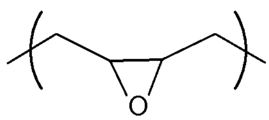

(III)

3. Composition according to claim 1 or claim 2, **characterized in that** the cross-linking agent is chosen from compounds which comprise one carboxylic acid function and one thiol function, one non-aromatic amine function and one thiol function, two carboxylic acid functions and one thiol function, one carboxylic acid function, one non-aromatic amine function and one thiol function, two thiol functions or three thiol functions.

4. Composition according to claim 3, **characterized in that** the cross-linking agent is chosen from compounds which comprise two carboxylic acid functions and one thiol function, or three thiol functions, and, preferably, from thiomalic acid, mercaptosuccinic acid, dimercaptosuccinic acid, pentaerythritol tetrakis(3-mercaptopropionate), pentaerythritol tetrakis-(2-mercaptoacetate), trimethylolpropane tris(3-mercaptopropionate) and tris[2-(3-mercaptopropionyloxy)ethyl]isocyanurate.

5. Composition according to any one of claims 1 to 4, **characterized in that** the cross-linking agent is chosen from 2-(dimethylamino)ethyl, 2-(dimethylamino)-ethyl acrylate, 2-(diethyl-amino)ethyl acrylate and 3-(dimethylamino)propyl acrylate.

6. Composition according to any one of claims 1 to 5, **characterized in that** it comprises in percentages by mass of the total mass of the composition:

   - from 45 to 96% of polybutadiene prepolymer;
   - from 2.5 to 55% of cross-linking agent; and
   - from 0.1 to 2.2% of catalyst.

7. Composition according to any one of claims 1 to 6, **characterized in that** it is in the form of a solution and further comprises an organic solvent, which is, preferably chosen from methylethylketone, tetrahydrofurane, ethyl and methyl ether, ethyl acetate and mixtures thereof.

8. Composition according to claim 7, **characterized in that** the polybutadiene prepolymer, the cross-linking agent and the catalyst together represent between 0.5 and 5% in percentages by mass of the total mass of the composition,

while the organic solvent represents between 95 and 99.5% in percentages by mass of the total mass of the composition.

**9.** Composition according to any one of claims 1 to 6, **characterized in that** it is in the form of an emulsion with an organic internal phase and an aqueous external phase.

**10.** Composition according to claim 9, **characterized in that**:

- the organic internal phase comprises the polybutadiene prepolymer, the cross-linking agent and the catalyst in an organic solvent immiscible with water, while the aqueous external phase comprises a surfactant in water; or
- the organic internal phase comprises the polybutadiene prepolymer in an organic solvent immiscible with water, while the aqueous external phase comprises the cross-linking agent, the catalyst and a surfactant in water.

**11.** Method of sizing reinforcing fibres, **characterized in that** it comprises applying at least one layer of a sizing composition according to any one of claims 1 to 10 on a surface of the fibres and then heat treating the layer thus applied.

**12.** Method of improving the adhesion of reinforcing fibres with respect to an organic matrix forming with the fibres a part made of a composite material, the part being obtained by bringing the fibres into contact with a resin that can be cured by chain transfer polymerization, then by polymerizing the resin, **characterized in that** it comprises, before the fibres are brought into contact with the resin, a sizing of the fibres by applying at least one layer of a sizing composition according to any one of claims 1 to 10 on a surface of the fibres and then heat treating the layer thus applied.

**13.** Method of manufacturing a part made of a composite material comprising reinforcing fibres in an organic matrix, comprising bringing the reinforcing fibres into contact with a resin that can be cured by chain transfer polymerization and polymerizing the resin, **characterized in that** it further comprises, before the fibres are brought into contact with the resin, a sizing of the fibres by applying at least one layer of a sizing composition according to any one of claims 1 to 10 on a surface of the fibres and then heat treating the layer thus applied.

**14.** Method according to any one of claims 11 to 13, **characterized in that** the reinforcing fibres are carbon fibres.

**15.** Method according to any one of claims 12 to 14, **characterized in that** the curable resin is chosen from polyesters, epoxies, epoxy(meth)acrylates, (meth)acrylates with a urethane core, bismaleimides, elastomers and silicons.

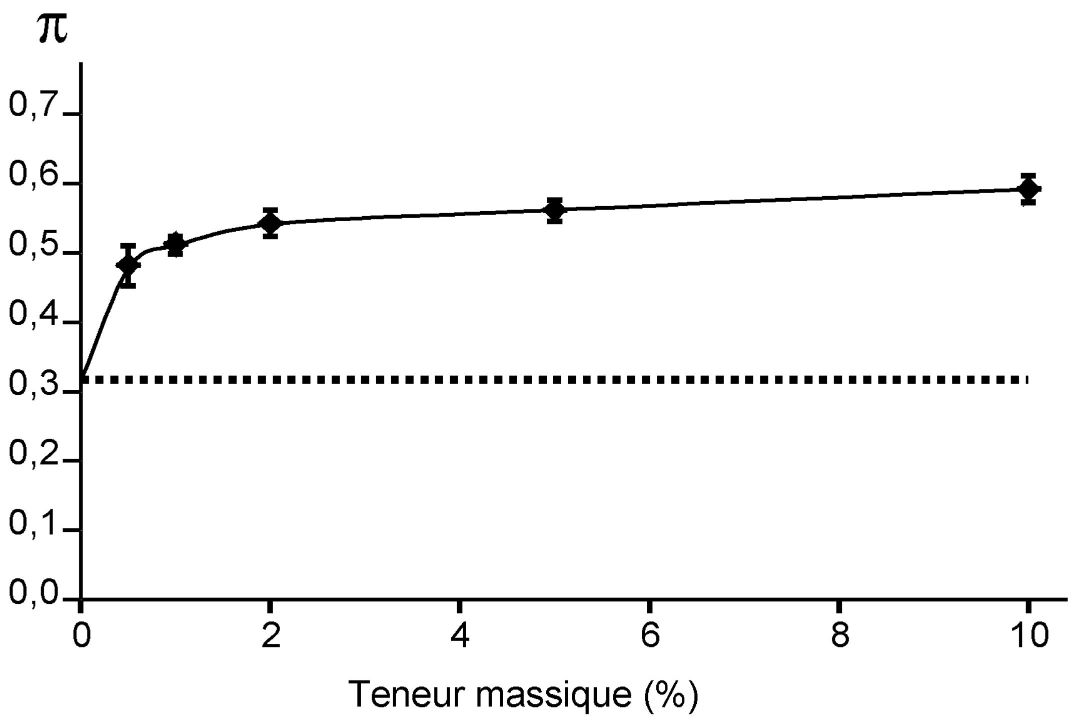
π
0,7
0,6
0,5
0,4
0,3
0,2
0,1
0,0
0
2
4
6
8
10
Teneur massique (%)

FIG. 1A

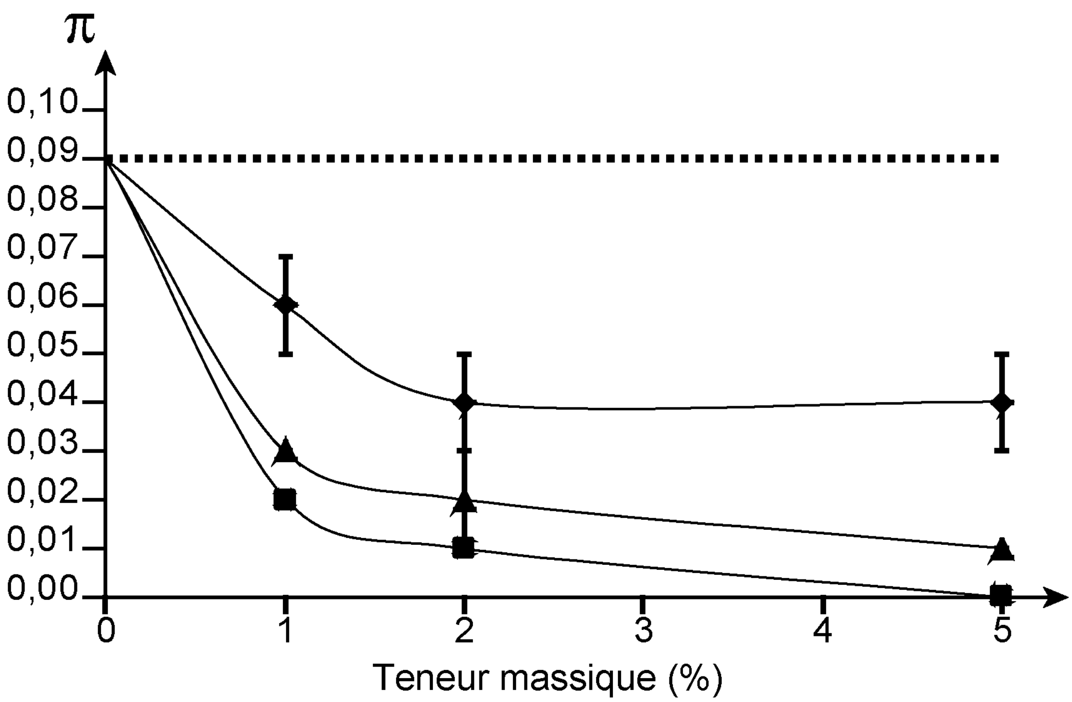
π
0,10
0,09
0,08
0,07
0,06
0,05
0,04
0,03
0,02
0,01
0,00
0
1
2
3
4
5
Teneur massique (%)

FIG. 1B

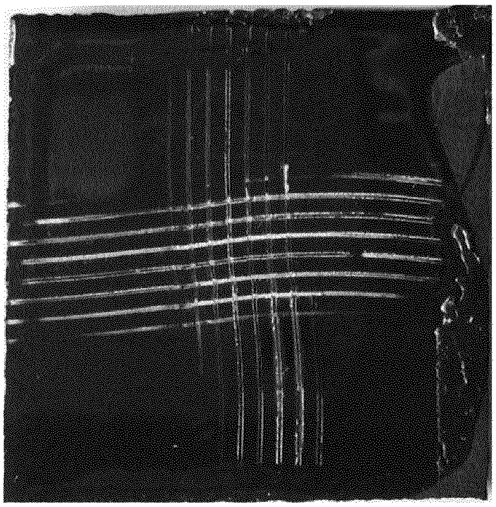

FIG. 2A

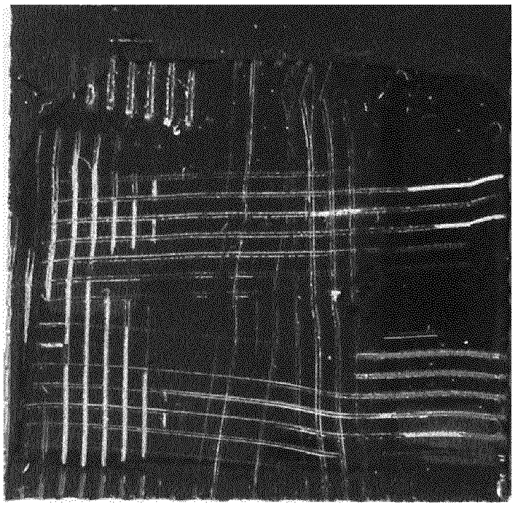

FIG. 2B

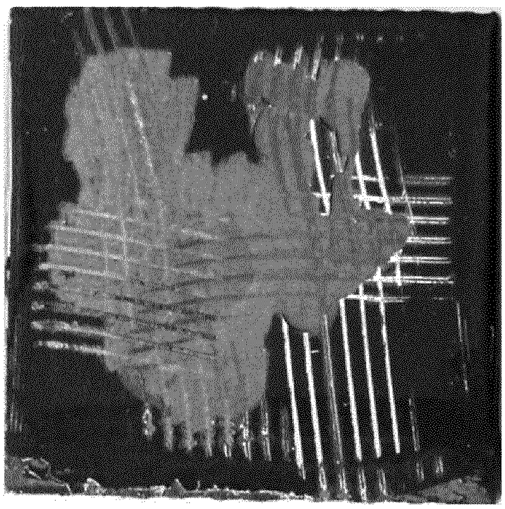

FIG. 2C

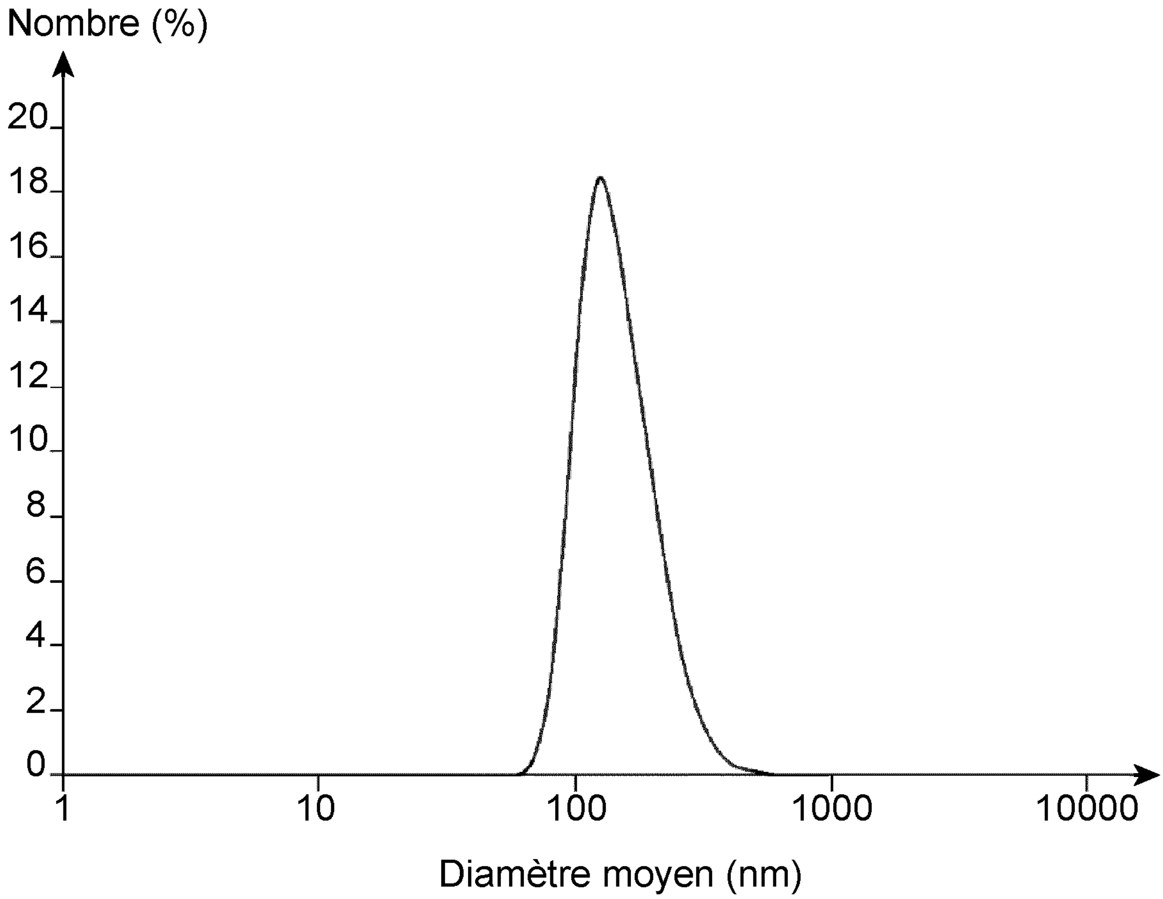
Nombre (%)
20
18
16
14
12
10
8
6
4
2
0
1
10
100
1000
10000
Diamètre moyen (nm)

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- JP 3076869 A
- EP 1484435 A
- EP 0640702 A
- JP 2002327374 B
- EP 1924727 A
- EP 2099849 A
- JP 2002327374 A

### Littérature non-brevet citée dans la description

- **JIANYE LIU ; HEYI GE ; JUAN CHEN ; HUASHI LIU.** *Advanced Materials Research,* vol. 239-242, 2958-2961